# EUROPEAN PATENT APPLICATION

(11) **EP 0 983 730 A2**
(43) Date of publication of application: **08.03.2000**
(21) Application number: 99117103.4
(22) Date of filing: 31.08.1999
(51) Int. Cl.: A23N 12/02

(54) **A food washing apparatus**

(30) Priority: 03.09.1998 JP 24947098; 21.12.1998 JP 36225698
(71) Applicant: Ryubi Company Ltd., Kawasaki-shi, Kanagawa-ken (JP)
(72) Inventor: Fumihiro, Goto, Kawasaki-shi, Kanagawa-ken (JP)
(74) Representative: Seidel, Herta, Dipl.-Phys.

(57) **Abstract**

A food washing apparatus includes means to generate a sheet-like water jet stream which should be forced against foods (10) such as marine products including edible jerryfishes (10J), seaweeds, shucked or shelled shellfishes or the likes, farm products including vegetables or fruits and so on while they are conveyed through a water jet stream (18) distribution area or food wash area (14). A plurality of sheet-like water jet stream (18) layers are generated at a predetermined angle and/or from various directions and are struck against the food (10) surfaces so as to wash them and remove foreign matters such as insects, mud, pebbles, fish scales or the likes from the foods.

## Description

This invention pertains to an apparatus for washing foods and more particularly to an apparatus for washing foods while foreign matters such as insects, mud, pebbles, fish scales or the likes are removed from the foods.

Various foods such as marine products including edible jerryfishes, seaweeds, shucked or shell-covered shellfishes or the likes and farm products including vegetables, fruits or the likes tend to have foreign matters such as insects, mud, pebbles, sand, straw pieces, hairs, fish scales or the likes attached thereto after they are collected and before they are cooked.

For example, the edible jerryfishes generally used for Chinese style dishes are commercially available while they are preserved with salt. Such edible jerry fishes as preserved with salt are washed in water for removing salt therefrom and then heated for a short time before they are cooked. They are cut into many strips, combined with other foods while being dressed. There is a high demand for the edible jerryfishes because of their unique sense and also because of their low calorie.

In order to maintain a good quality of these edible jerryfishes during their transport, they are generally preserved with salt after collected. Before they are processed and/or packed, they are washed or cleaned by salt water and then cut into pieces having a predetermined size.

Such marine products as seaweeds or shellfishes other than the edible jerryfishes may be treated in a manner similar to the edible jerryfishes.

Furthermore, farm products such as vegetables or fruits are packed in a case after they are collected for their storage or transportation. Before they are cooked, they have to be washed in water.

The foreign matters such as insects, mud, pebbles, sand, straw pieces, hairs, fish scales or the likes attached to the foods have to be removed before they are cooked or had.

In one of prior arts, they are washed by being contained in a cage and immersed into a water tank, which are disclosed by JP8-322532 and JP10-117947. In another prior art, they are washed by being immersed in a water tank while they are conveyed on a conveyor, which is disclosed by JP5-84058. In a further prior art, foods such as soybeans are treated by an apparatus having a water tank containing water into which steam is jetted so as to generate bubbles and a conveyor to convey the foods in a cage through the water tank, which is disclosed in United States Patent No. 4,248,141.

However, the apparatuses of these prior arts cannot effectively remove the foreign matters such as insects, mud, pebbles, sand, straw pieces, hairs, fish scales or the likes from the foods because the foods are just exposed to the water flowing or being agitated. In addition thereto, the foods cannot be washed by water having neither foreign matters nor stains because the water within the water tank in which the preceding foods are washed is kept within the water tank, through which the succeeding foods are conveyed for being washed.

Accordingly, it is a principal object of the invention to provide an apparatus for washing foods while foreign matters such as insects, mud, pebbles, sand, straw pieces, hairs, fish scales or the likes which tend to be attached thereto or which the foods have as parts thereof can be effectively removed.

It is another object of the invention to provide an apparatus for washing foods by use of water always having no stains so that the foods become never more dirty.

In accordance with a principle of the present invention, there is provided an apparatus for washing foods comprising a food conveyor means to convey the foods through a food wash area; and a water jet stream generator means to generate a sheet-like water jet stream and direct it to the food wash area so that the sheet-like water jet stream is struck against the foods whereby the foods are washed with foreign matters removed.

The water jet stream generator means preferably generates a plurality of sheet-like water jet stream layers which are struck against the foods at a predetermined angle relative to a conveying surface of the food conveying means and/or from various directions relative to a conveying direction of the food conveyor means.

The sheet-like water jet stream is struck against the foods all over the surfaces thereof while they are conveyed by the food conveyor means.

In case the foods are plane foods such as edible jerryfishes, shucked shellfishes or the likes, they may be conveyed while being held between upper and lower conveying members such as net-like conveyor members through which water is allowed to flow and at least one pair of opposing sheet-like water jet stream layers are struck against the opposite surfaces of the foods from opposite directions so that the opposing sheet-like water jet stream layers are jetted in a plane. They may be directed to the surfaces of the foods at a predetermined angle relative to the conveying surface of the food conveying means in a manner either traverse or deflected relative to the horizontal faces of the conveying members so that they traverse the conveying members in a widthwise direction or in an oblique direction.

In case the foods are foods such as vegetables, fruits or the likes other than the marine products, they are conveyed while being mounted on a conveying member also such as a net-like conveyor member through which water is allowed to flow and a plurality of sheet-like water jet stream layers are struck against the surfaces of the foods. They may be upwardly or downwardly directed to the surfaces of the foods in a manner inclined relative to the horizontal faces of the conveying member or in a manner traverse thereto in a widthwise direction.

The sheet-like water jet stream serves to wash the foods while they are crumpled and while there are effectively removed foreign matters such as insects, mud, pebbles, sand, straw pieces, hairs, fish scales or the likes attached to the foods by keenly scattering them from the foods.

The water jet stream generator means may comprise a water pump and at least one water jet stream generator which may have either a plurality of slit type nozzles or a single elongated slit type nozzle.

A water circulation means may be provided which serves to circulate water so that it supplies the water to the water jet stream generator means, receives the water from the food wash area and return it to the water jet stream generator means.

The water circulation means may comprise a water supply tank to supply the water to the water jet stream generator means, a water receipt tank to receive the water from the food wash area and a water return passage including a pump and a filter to transfer the water within the water receipt tank to the water supply tank while filtering the dirty water so as to purify it. The water supply tank may supplementally receive additional water from a water supply source such as water service.

A water collector means may be provided which serves to receive and collect the water after struck against the foods and introduce it into the water receipt tank. The water collector means may have an interruption member or members which are disposed between a conveying area of the food conveyor means and the return area thereof. The interruption member or members serve to interrupt the foreign matters removed from the foods onto the food conveyor means from the food conveyor means at the conveying area or the return area thereof whereby the succeeding foods can be conveyed on the food conveyor means having no dirt such as the removed foreign matters attached again thereto.

The above and other objects and features of the invention will be apparent from the description of the embodiments of the invention taken along with reference to the accompanying drawings in which;
Fig. 1 is a plane view of an apparatus for washing foods constructed in accordance with one embodiment of the invention with an upper conveyor member and a hood shown to be omitted therefrom for good understanding thereof wherein plane sea foods such as edible jerryfishes are suitably washed;
Fig. 2 is a side elevational view of the apparatus of Fig. 1 with the upper conveyor member and the hood shown therein'
Fig. 3 is a cross-sectional view of the apparatus of Figs. 1 with conveyor members, interruption members and a water collector shown therein for illustration of a water collector means used therein;
Fig. 4A is an enlarged perspective view of a water jet stream generator used in the apparatus of Figs. 1 through 3;
Fig. 4B is an enlarged perspective view of a water jet stream generator in another form which may be used in the apparatus of Figs. 1 through 3;
Fig. 5A is a perspective view of a water jet stream generator in further form which may be used in the apparatus of Figs. 1 through 3;
Fig. 5B is an enlarged cross-sectional view of the water jet generator of Fig. 5A;
Fig. 5C is an enlarged perspective view of the water jet generator of Fig. 5A, but with a reversely L-shaped slit forming member shown to be omitted therefrom;
Fig. 6A is an enlarged plane view of a conveying member formed of a net in one form used in the apparatus of Figs. 1 through 3;
Fig. 6B is an enlarged plane view of a conveying member formed of a net in another form which may be used in the apparatus of Figs. 1 through 3;
Fig. 7 is a side elevational view of an apparatus for washing foods which is substantially identical to that of Figs. 1 through 3, except that it comprise means to forcibly remove the foods from the food conveyor means.
Fig. 8 is a plane view of an apparatus for washing foods constructed in accordance with another embodiment of the invention wherein vegetables or fruits are suitably washed;
Fig. 9 is a side elevational view of the apparatus of Fig. 8;
Fig. 10 (A) illustrates an operation of the apparatus of Figs. 8 and 9 in which the sheet-like water jet stream layers are struck against the foods in one mode;
Fig. 10 (B) illustrates an operation of the apparatus of Figs. 8 and 9 in which the sheet-like water jet stream layers are struck against the foods in another mode;

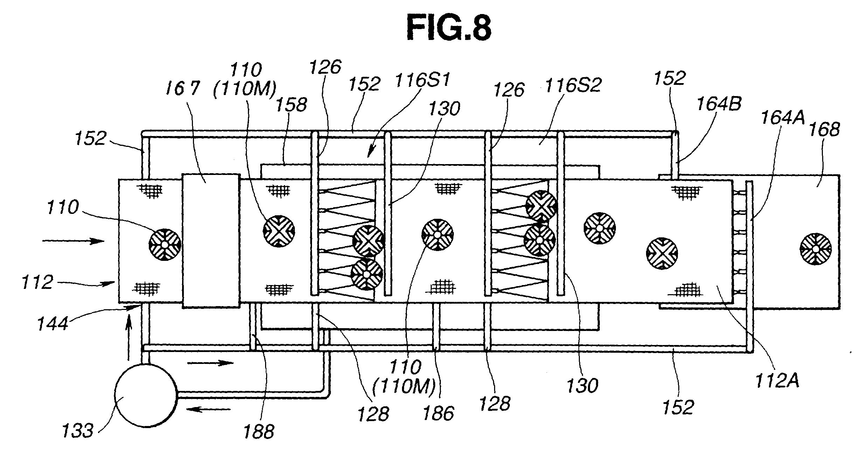

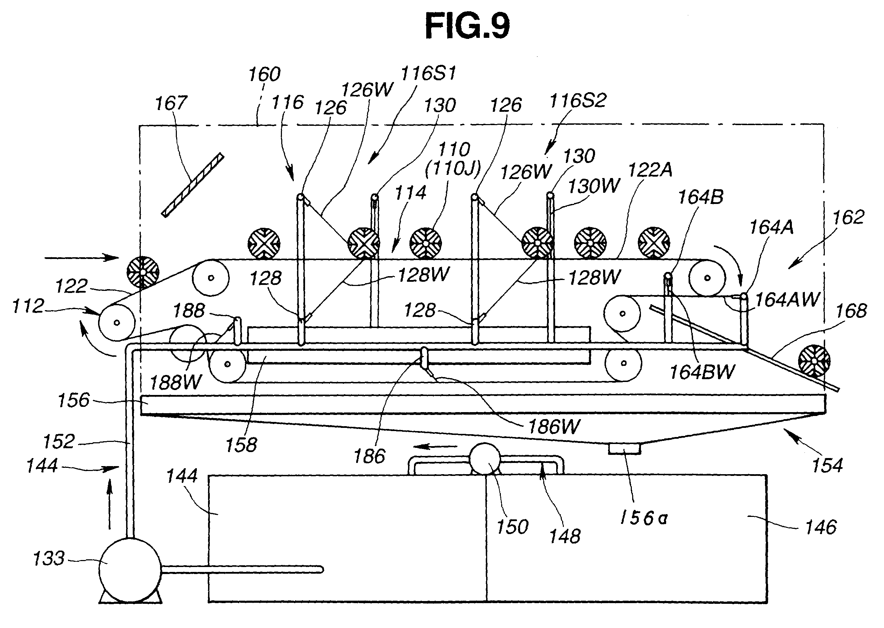

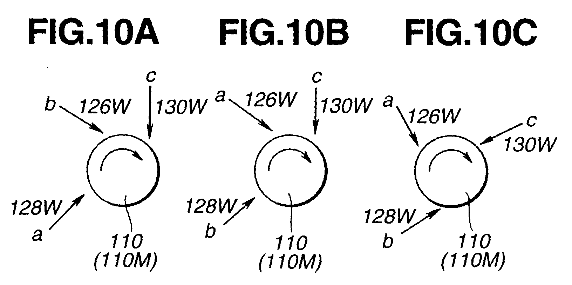

and Fig. 10 (B) illustrates an operation of the apparatus of Figs. 8 and 9 in which the sheet-like water jet stream layers are struck against the foods in a mode different from those of Figs. 10 (A) and 10 (B).

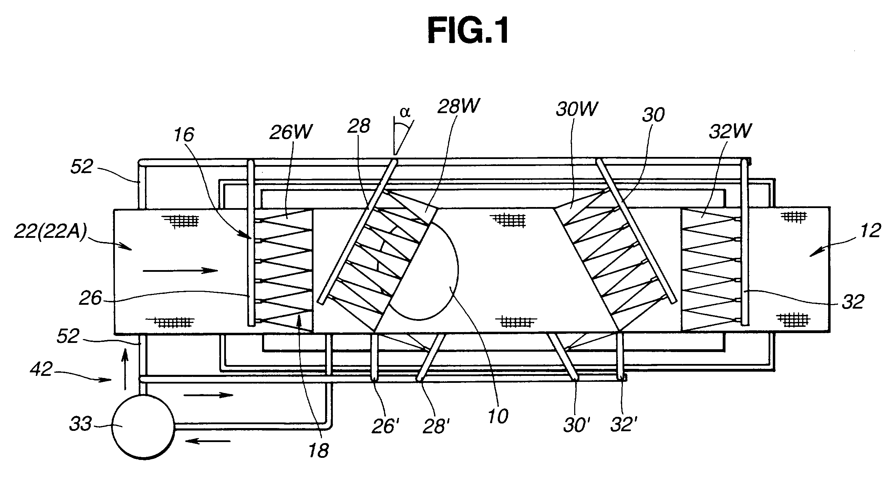

Now referring to Figs. 1 through 3, there is illustrated an apparatus for washing foods constructed in accordance with one embodiment of the invention wherein plane sea foods such as edible jerryfishes are suitably washed. In Figs. 1 through 3, although the foods are generally designated by a reference numeral 10, the jerryfishes are designated by a reference numeral 10J. In case that the jerryfishes 10J are to be washed, water to be used should be salt water.

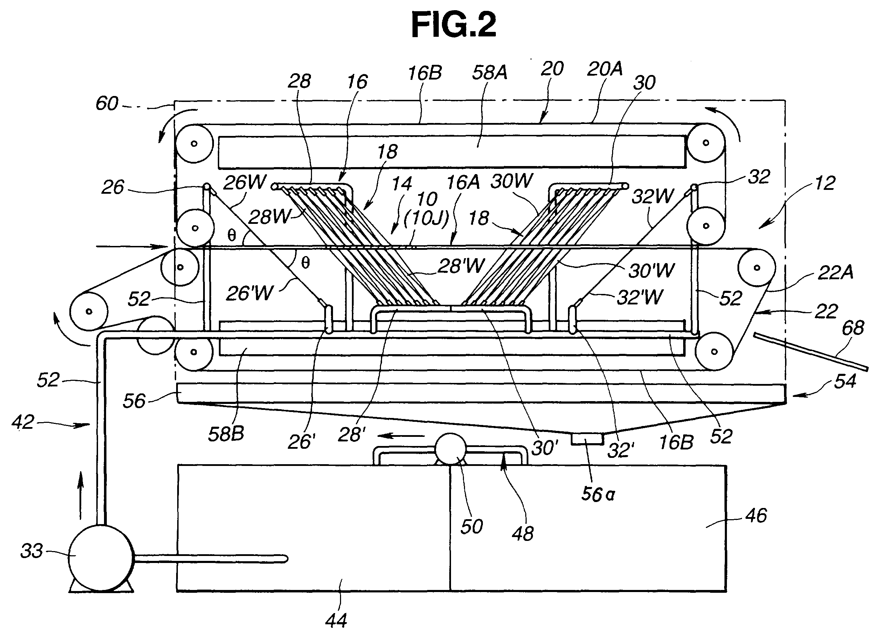

The apparatus for washing foods comprises a food conveyor means 12 to convey the foods 10 through a food wash area 14 and a water jet stream generator means 16 to generate a sheet-like water jet stream which is generally designated by a reference numeral 18 in Figs. 1 and 2 and direct it to the food wash area 14 so that the sheet-like water jet stream 18 is struck against the foods 10. The water jet stream generator means 12 may spout salt water suitable for washing the edible jerryfishes 10.

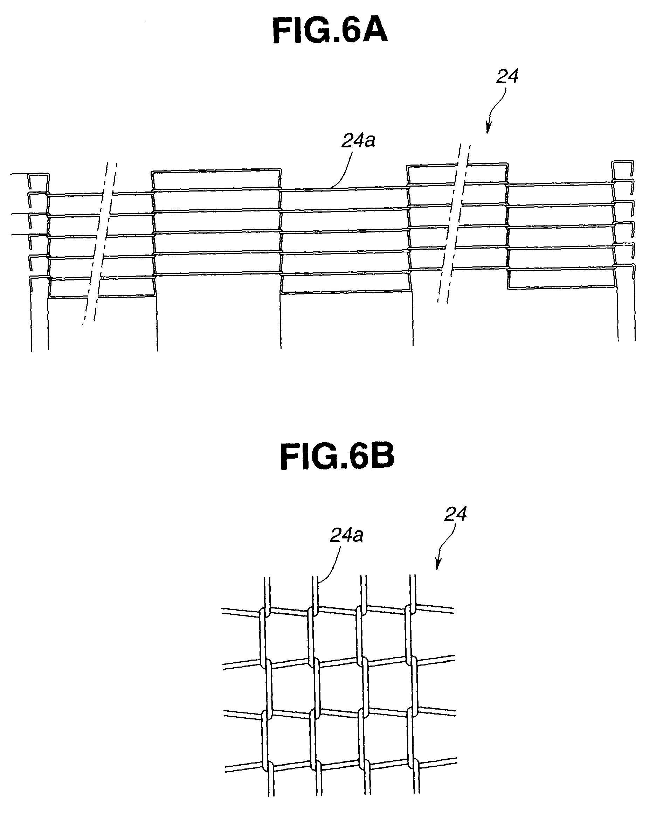

In the illustrated embodiment, the food conveyor means 12 may comprise upper and lower conveyor members 20 and 22, which may preferably be in the form of endless type conveyor belts 20A and 22A. The foods 10 are conveyed form an inlet of the apparatus toward an outlet thereof as indicated by an arrow shown in Figs. 1 and 2 while they are held between the upper and lower conveyor belts 20A and 22A. The endless type conveyor belt 20A and 22A are formed of water penetrating material and preferably formed of net-like conveyor belt 24 through which water is allowed to flow 1 as shown in Figs. 6A and 6B. The net-like conveyor belt 24 may be formed of knitted elongated member 24a having a thickness of 2 mm or more or less. The elongated member 24a may be of metal, plastic material or plastic clad metal of corrosion resistance in the form of a thread. The conveyor belts 20A and 22A may be of ones commercially available under the trade name "Yuniko wire belt" from Universal Industrial Co., Ltd, Japan which is formed as shown In Fig. 6A. The upper and lower conveyor members 20 and 22 may have a width of 600 mm and the net may have a mesh distance of 3 mm through 8 mm.

The endless type upper and lower conveyor members 20 and 22 may be successively driven at a constant velocity by a drive power source not shown. Alternatively, the endless type upper and lower conveyor members 20 and 22 may be intermittently driven by the drive power source. The upper and lower conveyor members 20 and 22 may be preferably adjusted in their distance between them for conveying various foods therebetween although a distance adjusting mechanism is not illustrated in Figs. 1 and 2.

In the illustrated embodiment, the water jet stream generator means 16 may preferably generate the sheet-like water jet stream 18 including a plurality of sheet-like water jet stream layers, which are struck against the surfaces of the foods 10 at a predetermined angle relative to a conveying surface of the food conveyor means 12 and from various directions relative to a conveying direction thereof as described in details later.

More particularly, as shown in Figs. 1 and 2, the water jet stream generator means 16 may comprise four pairs of upper and lower water jet stream generators 26 and 26', 28 and 28', 30 and 30' and 32 and 32' which generate respective pairs of opposing water jet stream layers 26W and 26'W, 28W and 28'W, 30W and 30'W and 32W and 32'W.

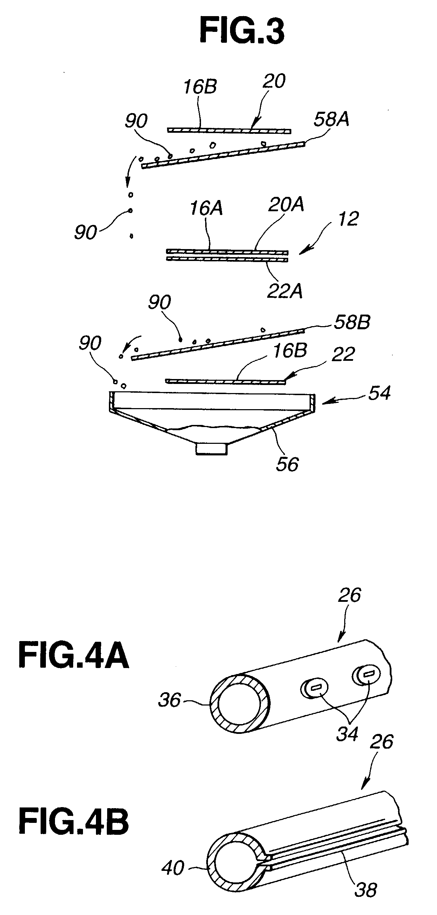

As shown in Fig. 4A, these pairs of water jet stream generators 26 and 26' through 32 and 32' comprise a plurality of slit type nozzles 34 which may be commonly provided on a water conduit 36 connected to a water supply tank as described later. The water jet stream generators 26 and 26' through 32 and 32' may be of ones commercially available under the model number "1/8MVNP40124S303 from Ikeuchi Co., Ltd., Japan.

As noted from Fig. 1, the pairs of opposing water jet stream layers 26W and 26'W through 32W and 32'W from the respective nozzles 34 are expanded in the form of triangle sheet so that they are collected together with each other onto the foods 10 so as to form the respective sheet-like water jet stream collective layers.

Alternatively, as shown in Fig. 4B, these pairs of water jet stream generators 26 and 26' through 32 and 32' may comprise a single elongated slit type nozzle 38 which is provided integrally to a water conduit 40 connected to the water supply tank in the same manner as the water conduit 36 of Fig. 4A. The nozzle 38 can generate the sheet-like water jet stream which extend in a widthwise direction from the nozzle 38 to the food wash area 14.

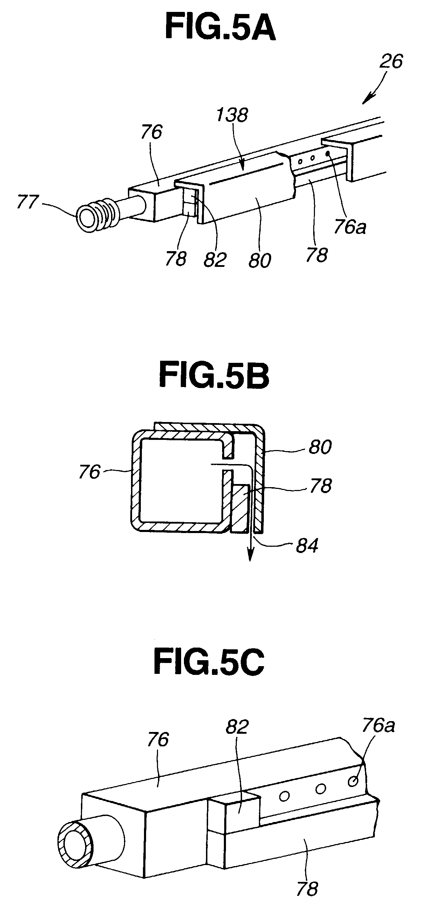

Otherwise, as shown in Figs. 5A through 5C, these pairs of water jet stream generators 26 and 26' through 32 and 32' may comprise a single elongated slit type nozzle 138 which is also provided integrally to a water conduit 76 having a rectangular cross section. A slit 84 may be formed between a first slit forming member 78 of rectangular cross section attached to the one side of the water conduit 76 and a second reverse L-shaped slit forming member 80 attached to an upper side face of the water conduit 76. A stop member 82 serves to close the space above the first slit forming member 78 and between the one side face of the water conduit 76 and the second slit forming member 80. The water jet stream generator of Figs. 5A through 5C can be more precisely formed because the slit can be easily adjusted by a space between the first and second slit forming members 78 and 80.

The water jet stream generator means 16 may preferably include a high pressure pump 33 to supply water under predetermined pressure from a water supply tank described later through a water conduit also described later. The high pressure pump 33 may be of one commercially available from Grundfos Pump Co., Ltd., Japan under a model number of CRN30-130/12,18.5kW. The particular pump 33 may supply high pressure water of about 30 kg/cm² or less than, but the pressure under which the water jet stream layers are struck against the foods 10 varies on the foods 10 to be washed. The water jet pressure of 10 to 15 kg/cm² may be proper for the jerryfishes.

The sheet-like water jet stream 18 can more effectively wash the foods 10 than water stream or water jet stream in other forms. More particularly, the effectiveness in washing the foods has much relation to quantity and pressure of the water. Higher effectiveness in washing the foods can be provided by a larger quantity of water under given pressure. Although a larger quantity of water can be obtained by a nozzle port of larger diameter. The nozzle having the slit type port to generate the sheet-like water jet stream 18 as used as shown in Figs. 4 and 5 can obtain a larger quality of water than the conventional nozzles having the circular port.

As shown in Figs. 1 and 2, the opposing water jet stream layers 26W and 26'W are struck against the opposite surfaces of the foods 10 from opposite directions so that the opposing sheet-like water jet stream layers 26W and 26'W preferably form a common plane. The other pairs of opposing water jet stream layers 28W and 28'W through 32W and 32'W are also struck against the surfaces of the foods 10 in the same manner as the opposing water jet stream layers 26W and 26'W. It will be noted that the opposing water jet stream layers serve to counterbalance forces applied to the opposite surfaces of the jerryfishes 10J.

With the counterbalanced forces applied to the opposite surfaces of the jerryfishes 10J, they can be effectively washed while they are being widely expanded between the upper and lower conveyor members 20 and 22 and never slide between and on them. This allows the jerryfishes 10J to be washed for a longer time than otherwise and over the wider surfaces of the jerryfishes 10J.

If only one of the opposing water jet stream layers 26W and 26'W through 32W and 32'W, for example only the upper water jet stream layers 26W through 32W are jetted against the jerryfishes 10J, then the jerryfishes 10 will be forwardly forced by the water jet stream layers 26A and 28W while they will be reversely forced by the water jet stream layers 30A and 32W even though the jerryfishes 10 are held between the upper and lower conveyor members 20 and 22.

With the jerryfishes 10J moved in the direction in which the water jet stream layers are jetted, the time in which the jerryfishes 10J contact the water jet stream layers will be shorter and the jerryfishes 10J on the conveyor members 20 and 22 will be contracted so as to form wrinkles. This causes the effectiveness in washing the jerryfishes 10J to be lowered and therefore the foreign matters fail to be removed therefrom.

Alternatively, the opposing water jet stream layers may be directed so that they are crossed near the jerryfishes 10 or offset to each other relative to the conveying direction.

As also shown in Fig. 1 and 2, the opposing water jet stream layers 26W and 26'W through 32W and 32'W are preferably directed to the surfaces of the foods 10 at various inclination angles θ relative to the horizontal conveying faces of the conveying members 20 and 22. The inclination angles θ of the opposing water jet stream layers 26W and 26'W through 32W and 32'W may range between 30° and 60°.

It should be noted that since the foods 10, especially the jerryfishes 10J have much wrinkles or creases overlapped to each other, the foreign matters cannot be effectively removed from the wrinkles or creases in which the foreign matters come if the water jet stream layers are jetted against the jerryfishes 10J just at a constant angle and more badly at a right angle relative to the horizontal conveying faces of the conveyor members 20 and 22.

As noted from Fig. 1, the pairs of the opposing water jet stream layers 26W and 26'W, 32W and 32'W traverse the conveyor members 20 and 22 in a widthwise direction while the pairs of the opposing water jet stream layers 28W and 28'W, 30W and 30'W traverse the conveying members 20 and 22 at a deflection angle α of about 30° relative to the widthwise direction of the conveying members 20 and 22 in an oblique direction. The deflection angle α of the opposing water jet stream layers 28W and 28'W, 30W and 30'W may be one other than 30°, preferably except to 90° or 270° relative to the widthwise direction of the conveying members 20 and 22. In other words, the directions from which the sheet-like water jet stream layers 28W and 28'W, 30W and 30'W are directed are ones other than a direction parallel relative to a conveying direction of the conveyor means 16.

If the deflection angle α of the water jet stream layers 28W and 28'W, 30W and 30'W may be 90° or 270° relative to the widthwise direction of the conveying members 20 and 22, then the foods 10 are supposed to receive the water jet stream layers in a linear manner as the foods 10 are forwardly conveyed, which causes the water jet stream layers to ineffectively wash the foods 10.

With the opposing water jet stream layers 28W and 28'W, 30W and 30'W directed at the deflection angle α of other than 90° or 270°, preferably of 30° or more or less, the water jet stream layers 26W and 26'W through 32W and 32'W are struck against all over the surfaces of the foods 10 from various directions as the foods 10 are conveyed through the food wash area 14 so that the foreign matters such as insects, mud, pebbles, sand, straw pieces, hairs or the likes which come in the wrinkles or creases of the jerryfishes 10J are more effectively removed from the foods 10.

If they are struck against the foods from a single direction, then much foreign matters fail to be removed from the wrinkles or creases of the jerryfishes 10J. It is true if the water jet stream is not in the form of a sheet, but in the form of a shower.

As noted from Figs. 1 and 2, the water jet stream layers 26A, 28W, 30'W and 32'W are directed in a forward direction relative to the conveying direction while the water jet stream layers 26'A, 28'W, 30W and 32W are directed in a reverse direction relative to the conveying direction. This causes the foods to be washed around all the surfaces thereof.

In the illustrated embodiment, the apparatus for washing the foods may further comprise a water circulation means 42 to circulate salt water as washing water so that it supplies the water to the water jet stream generator means 16, receives the water from the food wash area 14 and return it to the water jet stream generator means 16.

The water circulation means 42 may comprise a water supply tank 44 to supply the salt water to the water jet stream generator means 16, a water receipt tank 46 to receive the water from the food wash area 14 and a water return passage 48 which may preferably include a water pump 50 and a filter not shown to transfer the water within the water receipt tank 46 to the water supply tank 44 while filtering the dirty water through the filter so as to purify it.

The water supply tank 44 may supplementally receive additional salt water while salt is added to water from an appropriate water source such as water service, if necessary. A water conduit 52 shown in Figs. 1 and 2 serves to supply the salt water from the water supply tank 44 to the water jet stream generator means 16.

In the illustrated embodiment, the apparatus of Figs. 1 and 2 may further comprise a water collector means 54 which serves to receive and collect the salt water after struck against the foods 10 for washing the foods 10 and introduce it into the water receipt tank 46 of the water circulation means 42.

The water collector means 54 may comprise a shallow funnel-like collector 56 which is disposed under the food conveyor means 12 so as to collect the water dropped from the food wash area 14. The salt water collected within the collector 56 is introduced through a narrow dropping opening 56a into the water receipt tank 46.

The water collector means 54 may further comprise two interruption members 58A and 58B which are disposed between a conveying area 16A of the food conveyor means 16 (corresponding to the food wash area 14) and the return area 16B thereof

More particularly, one of the interruption members 58A is disposed between the conveying area 16A and the return area 16B of the upper conveyor belt 20A while the other interruption member 58B is disposed between the conveying area 16A and the return area 16B of the lower conveyor belt 22A.

As noted from Fig. 3, the interruption members 58A and 58B may be inclined in a widthwise direction of the conveyor belts 20A and 22A and at their one edge disposed above the collector 56.

Thus, it will be noted that the foreign matters 90 attached to the upper conveyor belt 20A are dropped from the return area thereof onto the upper interruption member 58A without dropping the conveying area of the upper conveyor belt 20A while the foreign matters 90 attached to the lower conveyor belt 22A are dropped from the return area thereof onto the upper interruption member 58B without dropping the conveying area of the upper conveyor belt 22A.

The foreign matters 90 received on the interruption members 58A and 58B together with the water are slipperily moved along their inclination and dropped on the collector 56 of the water collector means 54 as shown in Fig. 3.

The weighty matters such as sand, pebbles or the likes among the foreign matters together with the water collected within the water receipt tank 46 sink on the bottom thereof while the light matters are filtered through the not shown filter in the water return passage 48 before they reach the water pump 50.

As shown in Fig. 1, a hood 60 indicated by a dotted line of Fig. 1 may be provided so as to surround the food conveyor means 12 except to the inlet and the outlet thereof. The hood 60 serves to prevent the removed foreign matters as well as the water from being widely scattered around. The hood 60 may be securely mounted on the upper edge of the collector 56 as shown in Fig. 2.

A chute 68 may be provided under the lower conveying member 22 at the outlet of the apparatus as shown in Fig. 2 so that the washed jerryfishes 10J are received from the lower conveying member 68.

With fresh water used for washing the jerryfishes 10J, they absorb too much water and therefore they tend to get softer. This damages the feeling of unique hardness which the jerryfishes have. With the salt water used, such an undesirable damage of the feeling can be avoided because the salt water prevents the jerryfishes 10J from absorbing too much water because of osmotic pressure by salt water.

However, if the time for which the jerryfishes 10J contact the washing water, then fresh water may be used. Otherwise, if the jerryfishes 10J are preserved with salt, then fresh water may be used just at the begnining of the operation because the water will get salt water as time lapses.

In operation, the jerryfishes 10 are transferred onto the lower conveyor belt 22A at the inlet of the apparatus and then covered by the upper conveyor belt 20A so as to be held between the upper and lower conveyor belts 20A and 2A toward the food wash area 14 whereby the jerryfishes 10j are expanded so as to allow them to be effectively washed. Thus, they are prevented by the upper and lower conveyor belts 20A and 20B from being moved by the water jet stream layers under high pressure while the water jet stream layers are struck against them.

The jerryfishes 10 reach the food wash area 14 where the sheet-like water jet stream layers 26W and 26'W through 32W and 32'W from the water jet stream generators 26 and 26' through 32 and 32' are successively struck against the jerryfishes 10 from the various directions.

Although each pair of opposing sheet-like water jet stream layers 26W and 26'W through 32W and 32'W are directed to the surfaces of the foods in a linear manner, the water jet stream layers are directed thereto from the various directions while the foods 10 are moved together with the conveyor belts 20A and 22A so that the water jet stream layers results in being struck against the foods 10 all over the surfaces thereof.

Also, it will be noted that since the water jet stream layers are directed thereto from the various directions while the foods 10 are moved together with the conveyor belts 20A and 22A, the foods 10 results in being crumpled by the directional sheet-like water jet stream layers 26W and 26'W through 32W and 32'W.

At that time, the directional sheet-like water jet stream layers 26W and 26'W through 32W and 32'W wash the jerryfishes 10J while they pierce into the meat of the jerryfishes 10J generally at the angle at which the water jet stream layers are directed to the conveying faces of the conveyor belts 20A and 22A and/or scatter the foreign matters from the jerryfishes 10.

After the water jet stream layers 26W and 26'W through 32W and 32'W are struck against the jerryfishes 10J so as to wash them, they drop together with the removed foreign matters onto the interruption members 58B, then are introduced into the collector 56 and finally are received by the water receipt tank 46 where the weighty foreign matters sink on the bottom thereof.

The salt water from which the weight foreign matters are separated is transferred by the water pump 50 to the water supply tank 44 through the not shown filter where the other foreign matters are removed from the salt water.

Thus, it will be noted that the salt water having no foreign matters removed from the preceding foods results in being contained in the water supply tank 44. This prevents the water jet stream generator means 16 from being interrupted by the removed foreign matters and therefore enables the succeeding foods to be washed by the clean salt water.

The washed jerryfishes 10J are received through the chute 68 onto a jerryfish container or another separate conveyor also not shown.

It should be noted that the deflection of the pairs of opposing sheet-like water jet stream layers 28W and 28'W, 30W and 30'W serves to most effectively form the water jet stream layers although the number of the nozzles 34 of the water jet stream generators slightly increases.

As shown in Fig.1, in case that the water jet stream generators 26 and 26' or 32 and 32' which are placed in a direction parallel to the conveying direction are formed by six slit type nozzles 34, the deflected water jet stream generators 28 and 28' or 30 and 30' may be formed by seven slit type nozzles 34, which means that only one nozzle 34 increases for each of these deflected generators.

After the jerryfishes 10J are washed as aforementioned, they may be fed by the aforementioned separate conveyor to a checker where it is confirmed that they have no foreign matter.

The interruption member 58A prevents the foreign matters and/or the rubbish matters removed from the foods 10 from being dropped onto the food wash area 14 of the food conveyor means 12.

It will be noted that water spray obtained by the sheet-like water jet stream layers striking against and rebounding from the net-like conveyor members 20 and 22 also serve to wash the foods 10 togther with the sheet-like water jet stream layers 26W and 26'W through 32W and 32'W being directly struck against the foods 10.

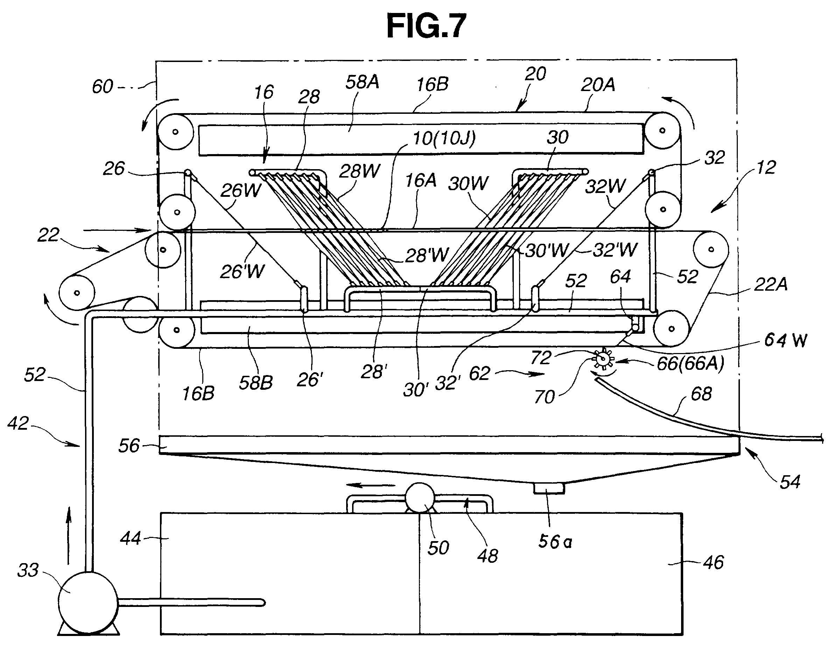

A modification of the apparatus of Figs. 1 and 2 is illustrated in Fig. 7. The modified apparatus is substantially identical to that of Figs. 1 and 2, except that it further comprises a food removal means 62 to forcibly remove the washed foods 10 from the food conveyor means 12.

As shown in Fig. 7, the food removal means 62 may comprise a water jet generator 64 which may be similar to either of the water jet stream generators 26 and 26' through 32 and 32' and a removal member 66 which may be in the form of an impeller type or blade-like rotor 66A.

The water jet generator 64 may be connected to the water supply conduit 52. The water jet stream layer 64W may be directed to the jerryfishes 10J onto the return area 16B of the conveyor belt 22A on the outlet side thereof so as to be removed from the conveyor belt 22A and dropped onto the chute 68 which is disposed under the conveyor belt 22A.

The blade-like rotor 66A may comprise eight blades 70 securely mounted on a shaft 72. Each of the blades 70 may be formed of a plate of stainless steel or other material having a width 640 mm, a thickness of 3 mm and a length of 6 mm. The shaft 72 may have a diameter of 15 mm. The rotor 66A may be so disposed below the return area 16B of the conveyor belt 22A that each of the blades 70 enters the meshes of the conveyor belt 22A while the jerryfishes 10J are forcibly removed from the net conveyor belt 22A.

The blade-like rotor 72 may be driven through a transmission from the drive power source not shown which drives the food conveyor means 12.

Although the edible jerryfishes 10J as the foods 10 are shown in Figs. 1, 2 and 7 to be washed, such foods as other marine products such as various fishes and shellfishes which may be shucked or covered with a shell. Especially, scales may be effectively removed from the fishes by the apparatus of Figs. 1, 2 and 7.

Referring now to Figs. 8 and 9, there is illustrated an apparatus for washing foods constructed in accordance with another embodiment of the invention wherein foods 110 such as vegetables or fruits are suitably washed. In Figs. 8 and 9. In Figs. 8 and 9, the foods 110 are shown to be "mekabu" in Japanese which are roots of "wakame" in Japanese or Undaria pinnatifida in technical term, one of seaweeds, but vegetables or fruits other than "mekabu" may be washed by the apparatus of Figs. 8 and 9. The "mekabu" will be called simply seaweeds 110M. Fresh water, but not salt water is preferably used for washing the foods 110.

The food washing apparatus of Figs. 8 and 9 also comprises a food conveyor means 112 to convey the foods 110 through a food wash area 114, a water jet stream generator means 116 to generate a sheet-like water jet stream 118 and direct it to the food wash area 114 so that the sheet-like water jet stream 118 is struck against the foods 110 and a water circulation means 142 to circulate water from the water supply source to the water jet stream generator means 116. The water jet stream generator means 116 may spout fresh water suitable for washing the foods 110 such as "mekabu", vegetables or fruits, which is different from the salt water used in the apparatus of Figs. 1 and 2.

Since the food conveyor means 112, the water jet stream generator means 116 and the water circulation means 142 are substantially identical to those of Figs. 1 and 2, the constructions different from them will be described hereinbelow. The same components are designated by reference numbers which are indicated by adding 100 to the corresponding reference numerals of Figs. 1 and 2.

First, the food conveyor means 112 comprises only a lower conveyor member 122 which may be formed of a net-like conveyor belt 122A. The foods 110 such as "mekabu" are transferred to the conveyor belt 122A at its inlet and conveyed toward the food wash area 114.

The water jet stream generator means 116 may comprise two sets of generator means sections 116S1 and 116S2. Each of the generator means sections 116S1 and 116S2 may comprise three pairs of water jet stream generators 126, 128 and 130 to generate water jet stream layers 126W, 128W and 130W, respectively.

All of these water jet stream generators 126, 128 and 130 of Figs. 8 and 9 are directed in a direction parallel to the conveying direction, which is different from those of Figs. 1, 2 and 7. The water jet stream generators 126 and 130 may be disposed above the conveyor belt 122A while the water jet stream generator 128 may be disposed below the conveyor belt 122A. The water jet stream generators 126 and 128 may be disposed so as to generate the water jet stream layers 126W and 128W at an inclination angle θ relative to the conveying surface of the conveyor members 120 and 122 as if they cross each other while the water jet stream generator 130 may be disposed so as to generate the water jet stream layer 130W in a vertical manner relative to the conveying surface. The angle θ at which the water jet stream layers 126W and 128W are directed to the foods 110 relative to the conveying surface of the conveyor members 120 and 122 may preferably be different from each other, but may range from 30° to 60°.

Thus, in each of the generator means sections 116S1 and 116S2, three water jet stream layers 126W, 128W and 130W are generated and successively struck against the specific food 10 at the various angles as illustrated in Figs. 10A and 10B.

More particularly, in each of the generator sections 116S1 and 116S2, the sheet-like water jet stream layer 128W is struck against the food 110 below the conveyor belt 122A in an upwardly inclined manner as indicated by an arrow a of Fig. 10A, then the sheet-like water jet stream layer 126W is struck against the food 110 above the conveyor belt 122A in a downwardly inclined manner as indicated by an arrow b of Fig. 10A and finally the sheet-like water jet stream layer 130W is struck against the food 110 above the conveyor belt 122A in a vertical manner as indicated by an arrow c of Fig. 10A.

Thus, the sheet-like water jet stream layers 128W, 126W and 130W are successively struck against the food 110 so that it is turned or rotated on the conveyor belt 122A as indicated by an arrow of Fig. 10A while it is slightly jumped above the conveyor belt 122A. This allows the food 110 to be washed all over the surfaces thereof while the foreign matters are removed therefrom by these water jet stream layers 128W, 126W and 130W. It should be noted that the vertical water jet stream layer 130W serves to prevent the food 110 from forcibly moving on the conveyor belt 122A due to the forwardly inclined water jet stream layers 126W and 128W. This enables the food 110 to positively contact with the water jet stream layers 126W, 128W and 130W.

Since two generator means sections 116S1 and 116S2 successively work on the foods 110 as they are conveyed by the conveyor belt 122a, they are more effectively washed while the foreign matters are removed therefrom.

Alternatively, as shown in Fig. 10B, the sheet-like water jet stream layers 126W, 128W and 130W may be successively struck against the foods 110 in order of the water jet stream layers 126W, 128W and 130W as indicated by arrows a, b and c in Fig. 10B. These successive sheet-like water jet stream layers 126W, 128W and 130W serve to wash the foods 110 in the same manner as illustrated in Fig. 10A.

Further alternatively, as shown in Fig. 10C, the sheet-like water jet stream layer 130W may be directed to the foods 110 not in a vertical manner, but in a reversely inclined manner. All the inclined sheet-like water jet stream layers 126W, 128W and 130W may be successively struck against the foods 110 in order of the water jet stream layers 126W, 128W and 130W as indicated by arrows a, b and c in Fig. 10C. These successive sheet-like water jet stream layers 126W, 128W and 130W also serve to wash the foods 110 in the same manner as illustrated in Figs. 10A and 10B. In this case, the reversely inclined water jet stream layer 130W of Fig. 10c may serve to prevent the foods 110 from forcibly moving on the conveyor belt 122A in the same manner as the vertically directed water jet stream layer 130W of Figs. 10A and 10B.

The sheet-like water jet stream layers 126W, 128W and 130W of Figs. 10A, 10B and 10C may be simultaneously struck against the foods 110, which is different from those of Figs. 10A through 10C.

The upper inclined water jet stream layer 126W together with the other water jet stream layers 128W and 130W serves to crumple the foods 110 while the lower inclined water jet stream layer 128W serves to raise the weighty foods 110 from the net-like conveyor belt 122A so as to prevent the foods 110 from being interrupted from being rotated because the foods 110 are held between the meshes of the conveyor belt 112A.

The quantity and the pressure of the water jet stream layers 126W, 128W and 130W may be adjusted by the kind (hardness) and the size of the foods 110 to be washed. The quantity and the pressure of the water jet stream layers should be larger as the foods are harder.

A food removal means 162 serves to forcibly remove the washed foods 110 from the food conveyor means 112 at the outlet thereof.

As shown in Fig. 9, the food removal means 162 may comprise water jet generators 164A and 164B which may be similar to either of the water jet stream generators 126 through 130 to generate sheet-like water jet stream layers 164AW and 164BW. The water jet stream layer 164AW may be directed to the first lower horizontal portion of the return area of the conveyor member 122 near the outlet thereof in a horizontal manner while the water jet stream layer 164BW may be downwardly directed to the first lower horizontal portion of the return area of the conveyor member 122 near the outlet thereof in a vertical manner. These water jet stream layers 164AW and 164BW serve to forcibly remove the washed foods 110 from the return area of the conveyor member 122 and allow them onto the chute 168.

Two conveyor cleaning means 186 and 188 may be provided along the return area of the conveyor member 122 in a spaced manner. These conveyor cleaning means 186 and 188 may comprise a water jet generator which may be similar to either of the water jet stream generators 126 through 130 to generate sheet-like water jet stream layers 186W and 188W, respectively.

The sheet-like water jet stream layer 186W from the conveyor cleaning means 186 is directed the second or middle lower horizontal portion of the return area of the conveyor member 122 to remove from the conveying member 122 the rubbish matters which are stripped off from the foods 110 while they are washed by the sheet-like water jet stream layers 126W through 130W.

The sheet-like water jet stream layer 188W from the conveyor cleaning means 188 is directed the lower curved portion of the return area of the conveyor member 122 near the inlet portion thereof to remove the remaining rubbish matters therefrom.

The water jet generators 164A and 164B of the food removal means 162 and the water jet generators of the conveyor cleaning means 186 and 188 may be connected to the water supply conduit 152.

As shown in Fig. 9, a food feeding limit means 167 which may be in the form of plate member may be provided at the inlet of the conveying member 122. The food feeding limit means 167 serves to limit a quantity of the foods 110 to be mounted onto the conveyor member 122.

The operation of the apparatus of Figs. 8 and 9 is substantially identical to that of Figs. 1 and 2 or Fig. 7, except that the foods 110 are conveyed by only lower conveyor member 122 and rotated or turned by the various sheet-like water jet stream layers 126W, 128W and 130W of the respective jet generator means sections 116S1 and 116S2 and except that the deflected water jet stream layers are not used for washing the foods 110, which might be transversely scattered from the conveyor member 122.

Although, the "mekabu" as the foods 110 are shown in Figs. 8 and 9 to be washed, such foods as other farm products such as vegetables like cabbages, Chinese cabbages or lettuces which will be used for preparing various dishes and fruits like apples, oranges or berries which will be used for producing jam.

Although some preferred embodiments have been described and illustrated with reference to the accompanying drawings, it will be understood by those skilled in the art that they are by way of examples, and that various changes and modifications may be made without departing from the spirit and scope of the invention, which is defined only to the appended claims.

## Claims

1. A food washing apparatus for washing foods comprising a food conveyor means to convey said foods through a food wash area ; and a water jet stream generator means to generate a sheet-like water jet stream and direct it to said food wash area so that said sheet-like water jet stream is struck against said foods.

2. A food washing apparatus as set forth in claim 1 and wherein said conveyor means comprises at least one conveyor member through which water is allowed to flow.

3. A food washing apparatus as set forth in claim 2 and wherein said food conveyor means comprises upper and lower conveyor members to hold said foods between them while said foods are expanded.

4. A food washing apparatus as set forth in either of claims 1 through 3 and wherein said water jet stream generator means generates a plurality of sheet-like water jet stream layers which are struck against said foods.

5. A food washing apparatus as set forth in claim 4 and wherein at least a pair of opposing sheet-like water jet stream layers are directed to said foods whereby said foods are prevented from being moved on said food conveyor means.

6. A food washing apparatus as set forth in claim 4 and wherein a plurality of sheet-like water jet stream layers are directed to said foods whereby said foods are turned on said food conveyor means without forwardly moving thereon.

7. A food washing apparatus as set forth in either of claim 1 through 6 and wherein said plurality of sheet-like water jet stream layers are directed to said foods at a predetermined angle relative to a conveying surface of said food conveyor means.

8. A food washing apparatus as set forth in claim 7 and wherein said angle at which said plurality of sheet-like water jet stream layers are directed ranges from 30° to 60°.

9. A food washing apparatus as set forth in either of claims 1 through 5, 7 and 8 and wherein said plurality of sheet-like water jet stream layers are directed from various directions relative to a conveying direction of said food conveyor means.

10. A food washing apparatus as set forth in claim 9 and wherein said directions from which said plurality of sheet-like water jet stream layers are directed are ones other than a direction parallel relative to said conveying direction of said conveyor means.

11. A food washing apparatus as set forth in claim 1 and wherein said sheet-like water jet stream generator means comprises at least one water jet stream generator which is formed of either a plurality of slit type nozzles connected to a common water conduit and a water supply source to supply water to said water conduit or a single elongated slit type nozzle connected to a water conduit and a water supply source to supply water to said water conduit.

12. A food washing apparatus as set forth in claim 11 and wherein said water supply source includes a high pressure pump.

13. A food washing apparatus as set forth in either of claims 1 through 12 and further comprising a water circulation means to circulate water through said sheet-like water jet stream generator means while said water is filtered after washing said foods.

14. A food washing apparatus as set forth in claim 13 and wherein said water circulation means comprises a water supply tank to supply said water to said water jet stream generator means, a water receipt tank to receive said water after washing said foods and a return passage including a water pump to feed said water from said water receipt tank to said water supply tank and a filter to filter said water.

15. A food washing apparatus as set forth in either of claims 1 through 14 and further comprising a water collector means to collect said water after washing said foods and introduce said water into said water receipt tank.

16. A food washing apparatus as set forth in claim 15 and wherein said water collector means includes an interruption member disposed between a conveying area and a return area of said food conveyor means whereby foreign matters removed from said foods on said food conveyor means are introduced into said water receipt tank without being attached to said return area of said food conveyor means.

17. A food washing apparatus as set forth in either of claims 1 through 16 and further comprising a food removal means to forcibly remove said foods from said food conveyor means after washed.

18. A food washing apparatus as set forth in either of claims 1 through 17 and further comprising a conveyor cleaning means to forcibly clean said food conveyor means at its return are whereby rubbish matters are removed from said food conveyor means.

19. A food washing apparatus as set forth in claim 17 or 18 and wherein said food removal means and/or said conveyor cleaning means comprise a sheet-like water jet stream generator.

20. A food washing apparatus as set forth in claim 1, either of 3 to 5 or either of 7 to 19 and wherein said foods are edible jerryfishes, shucked shellfishes, shelled shellfishes, fishes, crabs or the likes.

21. A food washing apparatus as set forth in claim 1, 2, 4, either of 6 to 8 or either of 10 to 19 and wherein said foods are seaweeds or farm products such as vegetables or fruits or the likes.
